# EUROPEAN PATENT APPLICATION

(11) **EP 4 651 005 A1**
(43) Date of publication of application: **19.11.2025**
(21) Application number: 25176205.0
(22) Date of filing: 13.05.2025
(51) Int. Cl.: G06F 21/86, H04L 9/08, G11C 7/18

(54) **DEVICE AND METHOD FOR GENERATING, STORING AND MANAGING CRYPTOGRAPHIC PRIVATE KEYS**

(30) Priority: 14.05.2024 IT 202400010840
(71) Applicant: Venier S.r.l., 30030 Vigonovo VE (IT)
(72) Inventor: VENIER, Oreste, 30030 Vigonovo (IT)
(74) Representative: Pezzoli, Ennio

(57) **Abstract**

A solution is provided for storing a secret. A corresponding storage device (100) comprises a plurality of non-volatile memory cells (315) that are embedded in an insulating support (105); each memory cell (315) may be programmed to store any of a plurality of logic values defined by corresponding levels of an electrical characteristic of the memory cell (315). Each memory cell (315) is connected between a corresponding pair of vias (130b,130c), extending from the first main surface (110t) and/or the second main surface (110b), which may be used to measure the electrical characteristic of the memory cell (315). A corresponding method for storing a secret is also provided.

## Description

### Technical field

The present invention relates to the storage field. More specifically, this invention relates to the storage of secrets.

### Background art

The background of the present invention is hereinafter introduced with the discussion of techniques relating to its context. However, even when this discussion refers to documents, acts, artifacts and the like, it does not suggest or represent that the discussed techniques are part of the prior art or are common general knowledge in the field relevant to the present invention. Particularly, it is expressly understood that possible drawbacks mentioned herein should not be considered to have been previously recognized in the prior art.

Several applications (especially in computing systems) involve the use of secret information, or simply secrets. Each secret is a piece of information that should not be known by unauthorized persons. A typical example is a cryptographic key (such as a private key corresponding to a public key), which may be used to perform a number of cryptographic operations by its owner (such as transactions on block-chains of crypto-currencies).

In general, the secrets may not be simply memorized in the minds of their owners, but they have to be saved into physical media, from which the secrets may be retrieved whenever it is necessary. The physical media should preserve the secrets as far as possible; particularly, the physical media should allow retrieving the secrets over time, even in case of accidental events like floods, fires, crashes, explosions. Moreover, most secrets are saved in clear form into the physical media (since even in case of secrets encrypted with other secrets, the second ones are to be saved in clear form to decrypt the first ones). Therefore, the physical media should also conceal the secrets as far as possible; particularly, the physical media should not expose the secrets to persons that handle them.

For this purpose, different techniques may be used.

Particularly, the secrets may be printed onto sheets of paper (such as in the form of QR-codes or mapped onto a predefined dictionary of words). However, the sheets of paper inevitably deteriorate over time (simply because of the air humidity) and they have substantially no resistance to external agents (like liquids, heat). Moreover, the secrets are immediately visible on the sheets of paper (so that every person handling them may make a copy or even memorize the secrets) and the secrets are copied during their printing, such as in printers and servers (so that the printing should be performed only by the owners of the secrets).

Moreover, the secrets may be engraved onto metallic plates. However, in this case as well the secrets are immediately visible on the metallic plates (so that every person handling them may make a copy or even memorize the secrets) and the secrets are to be made available to the persons involved in their engraving (so that the engraving should be performed only by the owners of the secrets).

Alternatively, the secrets may be saved into electronic devices (such as microprocessors). However, the electronic devices have low resistance to external agents (like heat, chemical substances, and radiations) and they are prone to malfunctions making impossible to retrieve the secrets from them.

Moreover, the secrets may be saved into storage devices (like flash memories, magnetic disks). However, in this case as well the storage devices have low resistance to external agents (like heat, chemical substances, radiations) and they are prone to malfunctions making impossible to retrieve the secrets from them (especially in case the storage devices embed electronic circuits controlling their operation).

Therefore, the above-mentioned techniques are not completely satisfactory. Indeed, the physical media might be damaged; particularly, this may happen simply over time or following accidental events. Therefore, when an extent of the damage precludes retrieving of the secrets from the physical media, the secrets are irremediably lost. The secrets saved onto the physical media might be stolen; particularly, this may be done by persons having access to the physical media (for their creation, handling) or to systems used to create them (such as printers, servers). Therefore, this may result in the dissemination of the secrets to unauthorized persons. In any case, the management of the physical media become far more complex. Particularly, only the owners of the corresponding secrets should participate in the creation of the physical media and should handle them later on; this adds a heavy burden to the owners of the secrets and it prevents the automation of mass production processes.

### Summary

The present invention is set out in the appended claims; particularly, one or more aspects of the present invention are defined in the independent claims and advantageous features thereof are defined in the dependent claims .

A simplified summary of the present invention is herein presented in order to provide a basic understanding thereof; however, the sole purpose of this summary is to introduce some concepts of the invention in a simplified form as a prelude to its following more detailed description, and it is not to be interpreted as an identification of its key elements nor as a delineation of its scope.

In general terms, the present invention is based on the idea of providing a storage device with vias for measuring an electric characteristic of its memory cells.

Particularly, an aspect provides a storage device for storing a secret. The storage device comprises a plurality of non-volatile memory cells that are embedded in an insulating support; each memory cell may be programmed to store any of a plurality of logic values defined by corresponding levels of an electrical characteristic of the memory cell. Each memory cell is connected between a corresponding pair of vias (extending from the first main surface and/or the second main surface), which may be used to measure the electrical characteristic of the memory cell.

A further aspect provides a corresponding method for storing a secret.

### Brief description of the drawings

The solution of the present invention, as well as further features and the advantages thereof, will be best understood with reference to the following detailed description thereof, given purely by way of a non-restrictive indication, with its explanations that apply *mutatis mutandis* to every aspect thereof (irrespectively of the context in which they occur); the description is to be read in conjunction with the accompanying drawings (wherein, for the sake of simplicity, corresponding elements are denoted with equal or similar references and their explanation is not repeated, and the name of each entity is generally used to denote both its type and its attributes, like value, content and representation). In this respect, it is expressly intended that the drawings are not necessary drawn to scale (with some details that may be exaggerated and/or simplified) and that, unless otherwise indicated, they are merely used to illustrate the structures and procedures described herein conceptually. In addition, orientations and related position references (such as front, rear, upper, lower, lateral and so on) are to be understood in relation to a condition of use of the corresponding entities. Particularly:
FIG.1-FIG.2 show a pictorial representation in top view and in bottom view, respectively, of a storage device according to an embodiment of the present invention,
FIG.3 shows a pictorial representation in cross-sectional view of a particular of the storage device according to an embodiment of the present invention, and
FIG.4 shows a schematic block diagram of the storage device according to an embodiment of the present invention.

### DETAILED DESCRIPTION

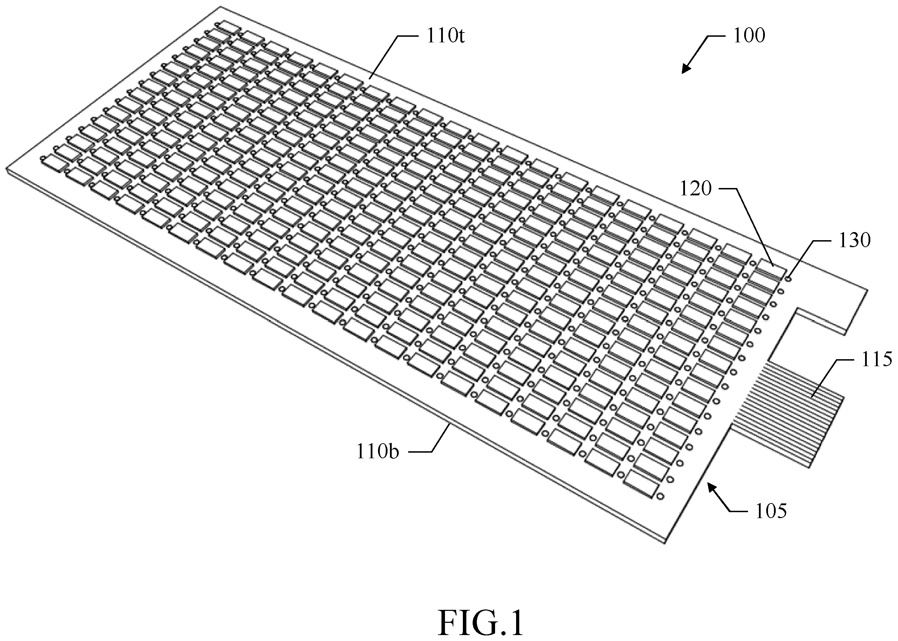

With reference in particular to FIG.1-FIG.2, a pictorial representation is shown in top view and in bottom view, respectively, of a storage device 100 according to an embodiment of the present invention.

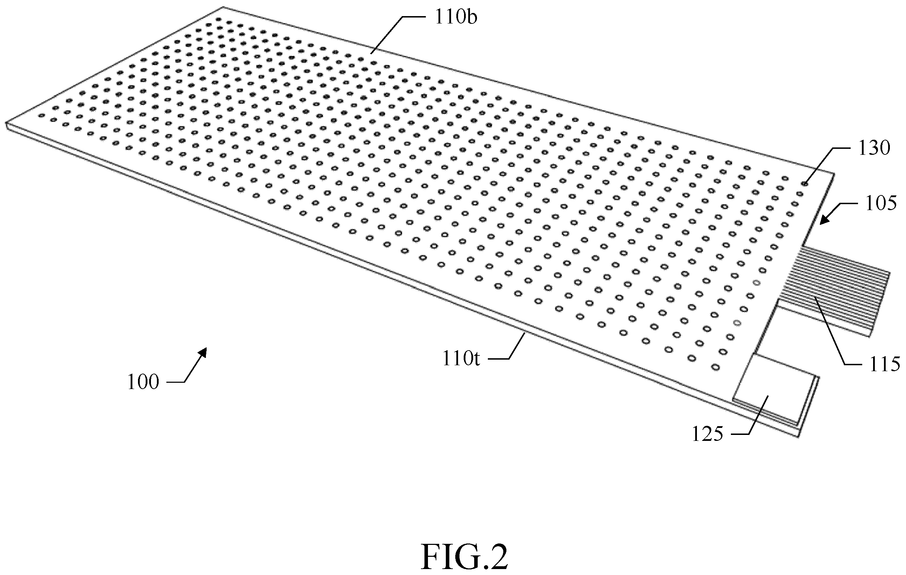

The storage device 100 comprises a Printed Circuit Board (PCB) 105 (or any other insulating support). The (printed circuit) board 105 has a first (top) main surface 110t and a second (bottom) main surface 110b (opposite to each other). The board 105 is provided with an edge connector 115, which may be used to plug the board 105 into a matching socket of a computing system, not shown in the figure (for example, a Personal Computer). The board 105 embeds a plurality of (non-volatile) memory cells, not visible in the figure (storing information that is retained even when the storage device 100 is not powered). Each memory cell may be programmed (written) to any of a plurality of logic values that are defined by corresponding levels of an electric characteristic of the memory cell (for example, 0-1 according to its electrical resistance); the current value of the electric characteristic of the memory cell determines the logic value stored therein. In the specific implementation shown in the figure, the memory cells are organized in a matrix (for example, with 16 rows x 20 columns). The memory cells are connected to corresponding diodes 120 (or other access elements), for example, mounted onto the top (main) surface 110t (see FIG.1). The storage device comprises an electronic circuit 125, for example, mounted onto the bottom (main) surface 110b (see FIG.2). The electronic circuit 125 (for example, based on a microprocessor) is used to program the memory cells according to a representation of the secret to be stored into the storage device 100 (for example, a private key with the addition of control information) and to read the same from the memory cells.

In the solution according to an embodiment of the present invention, the storage device 100 comprises a plurality of vias 130. The vias 130 extend into the board 105 from one or both of the top surface 110t and the bottom surface 110b, and they cross at least in part a thickness of the board 105 to reach the memory cells; particularly, each memory cell is connected between a corresponding pair of vias 130. The vias 130 of each memory cell may then be used to measure the electrical characteristic, *i.e.*, the electrical resistance with an ohmmeter in the example at issue, so as to determine the logic value stored in the memory cell.

The storage device 100 is quite effective in concealing the secret stored therein. Indeed, since the memory cells are embedded in the board 105, they are not directly exposed. Therefore, it is relatively difficult for persons handling the storage device 110 (especially for a short time) to steal the secret, since it is not immediately visible. This significantly reduces the risk of dissemination of the secret to unauthorized persons.

Moreover, the storage device 100 is quite effective in preserving the secret stored therein. Indeed, the board 105 has good resistance to external agents (like liquids, heat, chemical substances, and radiations). Therefore, even if the electronic circuit 125 is damaged, the logic values stored in the memory cells may still be determined by measuring their electric characteristic manually through the corresponding pairs of vias 130. This significantly reduces the risk of losing the secret over time, even in case of accidental events (like floods, fires, crashes, explosions).

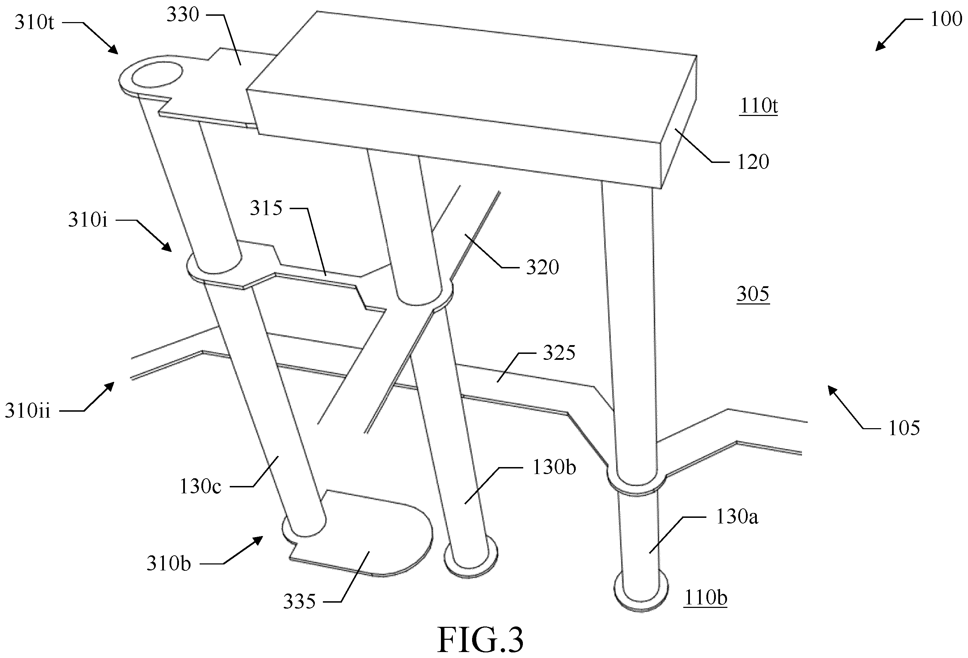

With reference now to FIG.3, a pictorial representation is shown in cross-sectional view of a particular of the storage device 100 according to an embodiment of the present invention.

The board 105 comprises an insulating substrate 305, which is made of electrically insulating material (for example, glass epoxy). Conductive layers made of electrically conductive material (for example, copper), patterned into a desired electric circuit, are supported by the insulating substrate 305. Particularly, the board 105 is of multi-layer type, with an (outer, top) conductive layer 310t applied onto the top surface 110t, an (outer, bottom) conductive layer 310b applied onto the bottom surface 110b, and two (inner) layers 310i and 310ii sandwiched between corresponding layers of the insulating substrate 305.

The conductive layer 310i forms a plurality of (memory) fuses 315, which define the memory cells. The fuses 315 have a small cross-section compared to the rest of the electric circuit of the board 105. Particularly, the fuses 315 are designed to sustain a current that flows in normal operative conditions (during reading operations); however, when a higher current is applied (during programming operations) the fuses 315 melt thereby breaking. Each memory cell stores a first logic value (for example, 1) when the corresponding fuse 315 is conductive (short circuit) or a second logic value (for example, 0) when the corresponding fuse 315 is non-conductive (open circuit).

The conductive layer 310i further forms a plurality of column (or bit) lines 320 and the conductive layer 310ii forms a plurality of row (or word) lines 325 for accessing the fuses 315 by the electronic circuit (not shown in the figure). Particularly, for each fuse 315 the board 105 comprises three through-hole vias, differentiated with the references 130a, 130b and 130c. Each (through-hole) via 130a, 130b, 130c is formed by a hole crossing the whole thickness of the substrate 305, from the top surface 110t to the bottom surface 110b; the hole is made conductive (for example, by electroplating), thereby ending with corresponding pads at the top surface 110t and at the bottom surface 110b. The via 130a is connected to a corresponding row line 325. The diode 120 associated with the fuse 315 is mounted (for example, with SMT technique) onto corresponding conductive tracks of the conductive layer 310t extending from the pads of the vias 130a and 130c, so as to be connected between them. The fuse 315 is connected, through corresponding conductive tracks of the conductive layer 310i, between the via 130c and the via 130b. The via 130b is connected to a corresponding column line 320. As a result, the diode 120 and the fuse 315 are connected in series between a corresponding pair of row line 325 and column line 320. Moreover, the conductive layer 310t forms a shielding plate 330 and the conductive layer 310b forms another shielding plate 335 that are superimposed to the fuse 315 in plan view (with no function from an electrical point of view).

As usual, the whole board 105 is then covered by a (conformal) protective layer of electrical insulating material, not shown in the figure (so as to prevent corrosion, leakage currents and short-circuits); for example, the protective layer is a translucent paint (such as based on a dilute solution of epoxy).

In case of damage of the storage device 100, for each fuse 315 a probe of a ohmmeter, not shown in the figure, is inserted into the corresponding via 130b and another probe of the ohmmeter is inserted into the corresponding via 130c (on either the top surface 110t or the bottom surface 110b). The ohmmeter then measures the electrical resistance between its probes. If the fuse 315 is conductive the ohmmeter measures a very low electrical resistance (ideally zero), indicating that the memory cell stores the logic value 1; conversely, if the fuse 315 is non-conductive the ohmmeter measures a very high electrical resistance (ideally infinite), indicating that the memory cell stores the logic value 0.

The above-described structure is very simple, and it may be manufactured with mass production processes (of multi-layer PCBs) at very low cost.

Particularly, the organization of the fuses 315 in a matrix with the corresponding diodes 120 allow accessing them selectively through the corresponding row lines 325 and column lines 320 (thereby avoiding the need of dedicates lines for accessing the fuses 315 individually).

Moreover, the vias 130a,130b,130c formed by through-holes (crossing the whole thickness of the substrate 305) allow accessing the fuses 315 from either the top surface 110t or the bottom surface 110b. Therefore, the electrical resistance of the fuses 315 may still be measured even in case of corrosion of the pads of the vias 130a,130b,130c on one of the (top/bottom) surfaces 110t,110b.

The pairs of shielding plates 330,335 cover the corresponding fuses 315 optically. This prevents the persons handling the storage device 100 from seeing the fuses 315 by putting the board 105 against the light (thereby determining their state and then the secret stored in the storage device 100). This allows using standard, and then cost effective, translucent paints to cover the board 105 (even if they do not protect the fuses 315 optically). Moreover, the vias 130a,130b,130c remain readily accessible on the (top/bottom) surfaces 110t,110b; indeed, the vias 130a,130b,130c are still visible under the translucent paint and they may be contacted electrically with the probes of the ohmmeter by simply tearing the (thin) translucent paint (thanks to their sharp profile).

Moreover, the shielding plates 330,335 (of electrical conductive material) further protect the fuses 315 against X-rays analysis. This makes it more difficult for persons handling the storage device 110 to steal the secret.

Nevertheless, in case of corrosion of the pads of the vias 130a,130b,130c on both the top surface 110t and the bottom surface 110b, the shielding plates 330,335 may be removed (for example, by etching the layers 310t and 310b). It is still possible to determine the state of the fuses 315 (and then the secret stored in the storage device 100) by observing them with the board 105 put against the light or by analyzing them with X-rays.

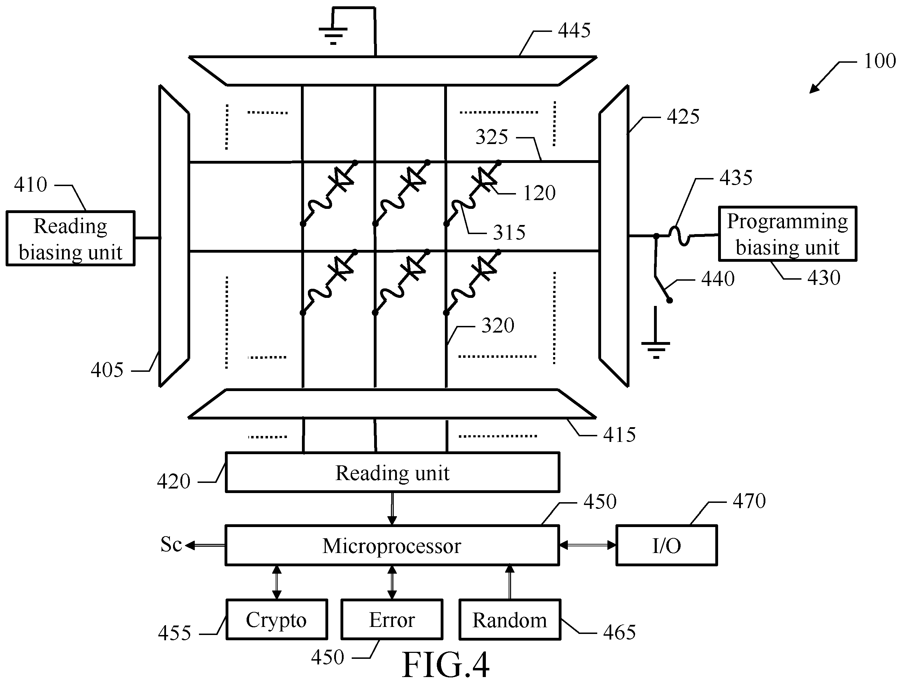

With reference now to FIG.4, a schematic block diagram is shown of the storage device 100 according to an embodiment of the present invention.

The storage device 100 comprises the matrix of the fuses 315 with the corresponding diodes 120 (with each pair of fuse 315 and diode 120 connected in series to form a corresponding memory block 315,210); for example, the memory blocks 315,120 are arranged in 16 rows and 20 columns. The memory blocks 315,120 of each row are connected to the corresponding row line 325 and the memory blocks 315,120 of each column are connected to the corresponding column line 320; for example, in each memory block 315,120 the diode 120 has an anode terminal connected to the row line 325 and a cathode terminal connected to a first terminal of the fuse 315, which has a second terminal connected to the column line 320.

The electronic circuit (125 in FIG.2) comprises the following components. A (reading) row selector 405 selectively couples a (selected) row line 325 with a (reading) biasing unit 410. The biasing unit 410 provides a (reading) biasing voltage for reading the fuses 315 (for example, +5V with respect to a reference voltage, or ground, derived from a power supply received at corresponding supply terminals of the edge connector of the board). A (reading) column selector 415 selectively couples all the column lines 320 with a reading unit 420. The reading unit determines and latches the logic values (defining a word) that are stored in the fuses 315 of a selected row (corresponding to the selected row line) according to the current flowing through the column lines 320 (for example, implemented by a pull-down resistor and a buffer for each column line 320). A (programming) row selector 425 selectively couples a (selected) row line 325 with a (programming) biasing unit 430. The biasing unit 430 provides a (programming) biasing voltage for programing the fuses 315 (for example, based on a capacitor that may be charged to +30V with respect to ground and a power transistor that may deliver a corresponding current). A (disabling) fuse 435 is interposed between the biasing unit 430 and the row selector 425. A switch 440 (for example, implemented by a power transistor) is connected between a node, common to the fuse 435 and the row selector 425, and a ground terminal maintained at ground. A (programming) column decoder 445 selectively couples a (selected) column line 320 with the ground terminal (for example, via a power transistor).

A microprocessor 450 controls operation of the whole storage device 100 (by means of control signals denoted as a whole with Sc). The microprocessor 450 is coupled with the reading unit 420 (for receiving each word that has been read). The microprocessor 450 exploits a cryptographic co-processor 455 (capable of performing cryptographic operations), an error control unit 460 (capable of performing error detection and correction operations) and a random number generator 465 (capable of generating pseudo-random numbers). Moreover, the microprocessor 450 is coupled with an Input/Output (I/O) interface 470 for communicating with the computer wherein the storage device 100 is plugged.

The storage device 100 is manufactured with all the fuses 315 and the fuse 435 that are conductive. Moreover, normally the row selector 405 insulates all the row lines 325 from the biasing unit 410, the column selector 415 insulates all the column lines 320 from the reading unit 420, the row selector 425 insulates all the row lines 325 from the fuse 435 and then the biasing unit 430, the column selector 445 insulates all the column lines 325 from the ground terminal, and the switch 440 is open.

In use, the storage device 100 is at first initialized by programming the fuses 315 (only once) according to the secret to be stored. The secret may be generated internally (in a pseudo-random way) by the random number generator 465. Alternatively, the secret is received from the outside (through the computer wherein the board in plugged). In this case, the computer sends the secret to the microprocessor 450 (through the I/O interface 470) over a secure communication channel implemented by the cryptographic co-processor 455 (for example, based on a public/private key infrastructure ensuring confidentiality and integrity of the secret). In both cases, the secret is not available (in clear form) outside the storage device 100. Therefore, the programming of the storage device 100 may be performed by any person (and not only by the owners of the secrets); the owners of the secrets are then relieved of the corresponding burden, thereby allowing the automation of mass production processes.

Once the secret is available to the microprocessor 450, the error control unit 460 generates a corresponding code block. The code block is generated from the secret (defining the actual payload information) with the addition of (redundancy) control information that allows detecting errors in the secret and correcting them (for example, 64 bits of control information based on the Reed-Solomon algorithm may be added to 256 bits of the secret to detect errors in 64 bits and to correct errors in 32 bits).

The microprocessor 450 then programs each fuse 315 (individually) according to a corresponding bit of the code block (256 + 64 = 320 in the example at issue). Particularly, when the bit has the logic value 1 the microprocessor 440 does not perform any action (so as to leave the fuse 315 conductive). Conversely, when the bit has the logic value 0 the microprocessor 450 burns the (selected) fuse 315. For this purpose, the microprocessor 450 controls the row selector 425 to connect the (selected) row line 325 of the selected fuse 315 to the biasing unit 430 through the fuse 435 (whereas the other row lines 325 are left floating) and it controls the column selector 445 to connect the (selected) column line 320 of the selected fuse 315 to the ground terminal (whereas the other column lines 320 are left floating). In this condition, the diode 120 associated with the selected fuse 315 is forward biased, so that the selected fuse 315 is connected between the biasing unit 430 and the ground terminal (whereas the other diodes 120 are reverse biased so that the corresponding fuses 315 are insulated from the biasing unit 430). A corresponding (high) current flowing across the selected fuse 315 melts it, thereby breaking the selected fuse 315 and then making it non-conductive. Therefore, the programming of the storage device 100 is performed entirely within it; this avoids the use of any external device, and then the risk of leaving some indications of the secret therein.

Once the whole code block has been stored into the storage device 100, the microprocessor 450 reads it (as described in the following) and verifies that the fuses 315 have been correctly programmed according to the code block. If not, the microprocessor 450 sends an error message to the computer (through the I/O interface 470) indicating that the storage device 100 is malfunctioning and then it has to be discarded. Conversely, the microprocessor 450 closes the switch 440. In this condition, the fuse 435 is connected between the biasing unit 430 and the ground terminal. A corresponding (high) current flowing across the fuse 435 melts it, thereby breaking the fuse 435 and then making it non-conductive. In this condition, the biasing unit 430 may not be connected to the fuses 315 any longer. This prevents the burning of any further fuse 315, thereby ensuring that the code block stored in the storage device 100 may not be modified.

Whenever the secret has to be used, a corresponding request is submitted to the storage device 100 from the computer (for example, a request of signing a document digitally with the corresponding private key). In response thereto, the microprocessor 450 reads the secret from the fuses 315. The fuses 315 are read one row at the time for each word of the code block stored therein. Particularly, the microprocessor 450 controls the row selector 405 to connect the (selected) row line 325 of the (selected) row to the biasing unit 410 (whereas the other row lines 325 are left floating) and it controls the column selector 415 to connect all the column lines 320 to the reading unit 420. In this condition, the diodes 120 associated with the (selected) fuses 315 of the selected row are forward biased, so that each selected fuse 315 is connected between the biasing unit 410 and the corresponding portion of the reading unit 420 (whereas the other diodes 120 are reverse biased so that the corresponding fuses 315 are insulated from the reading unit 420). For each selected fuse 315, when the fuse 315 is conductive a corresponding (low) current flows across its column line 325, so that the corresponding portion of the reading unit 420 determines that the logic value 1 is stored; conversely, when the fuse 315 is non-conductive (substantially) no current flows across its column line 325, so that the corresponding portion of the reading unit 420 determines that the logic value 0 is stored.

Once the whole code block has been read, the error control unit 460 verifies whether the secret may be extracted from the code block (*i.e.*, it has not errors or a few errors that may be corrected). If not, the microprocessor 450 sends an error message to the computer (through the I/O interface 470) indicating that the storage device 100 is damaged and then the secret has to be read manually (by measuring the electrical resistance of the fuses through the corresponding vias, observing the fuses against the light or analyzing the board with X-rays). Conversely, the error control unit 460 extracts the secret from the code block, possibly correcting it. In the latter case, the microprocessor 450 sends a warning message to the computer (through the I/O interface 470) indicating that the storage device 100 is partially defective and then it should be replaced as soon as possible (to prevent its possible complete damage). In any case, the microprocessor 450 then performs the required operation and returns a corresponding response to the computer (through the I/O interface 470); particularly, in the example at issue the microprocessor 450 signs the received document digitally with the private key and returns the signed document. These operations are performed inside the storage device 100 without the need of communicating the secret outside it (and then without any risk of disseminating the secret). For example, this allows creating a sort of digital safe that allows safekeeping a number of storage devices (such as in a vault of a bank for its clients) at the same time connecting them to an (external) computer for operating on them whenever necessary.

### Modifications

In order to satisfy local and specific requirements, a person skilled in the art may apply many logical and/or physical modifications to the present invention, provided that it remains within the scope of the claims. Particularly, the present invention may be practiced without the specific details (such as the numerical values) set forth in the preceding description to provide a more thorough understanding thereof; conversely, well-known features may have been omitted or simplified in order not to obscure the description with unnecessary particulars. Specific characteristics described in connection with any embodiment of the present invention may be incorporated in any other embodiment as a matter of general design choice. Moreover, items presented in a same group and different embodiments, examples or alternatives are not to be construed as *de facto* equivalent to each other (but they are separate and autonomous entities). In any case, each numerical value should be read as modified according to applicable tolerances; particularly, unless otherwise indicated, the terms "substantially", "about", "approximately" and the like should be understood as within 10%, preferably 5% and still more preferably 1%. Moreover, each range of numerical values should be intended as expressly specifying any possible number along the *continuum* within the range (comprising its end points). Ordinal or other qualifiers are merely used as labels to distinguish elements with the same name but do not by themselves connote any priority, precedence or order. The terms include, comprise, have, contain, involve and the like should be intended with an open, non-exhaustive meaning (*i.e.*, not limited to the recited items), the terms based on, dependent on, in agreement with, according to, function of and the like should be intended as a non-exclusive relationship (*i.e.*, with possible further variables involved), the term a/an should be intended as one or more items (unless expressly indicated otherwise), and the term means for (or similar functional formulation) should be intended as any structure adapted or configured for carrying out the relevant function.

More specifically, each of the following modifications may be applied (alone or in combination with any other modification) to the corresponding features mentioned above (wherein the features described in each complete sentence may be implemented independently of the features described in the other sentences, except for those strictly necessary functionally). Particularly, it is expressly understood that each feature mentioned above may be replaced by any of its alternatives or it may be generalized to the corresponding *genus* as set out in the following.

For example, an embodiment provides a storage device for storing a secret. However, the storage device may be of any type (for example, with different shape and size) and it may be used to store any secret (for example, a private key, a symmetric key, a password or a portion thereof) that is provided in any way (for example, generated internally, received from the outside in either encrypted or clear form); in any case, the use of the same storage device for storing any other information (even not of secret type) is contemplated.

In an embodiment, the storage device comprises an insulating support of electrically insulating material (having a first main surface and a second main surface opposite to each other). However, the insulating support may be of any type (for example, a board, a flexible structure) and of any insulating material (for example, glass epoxy, kapton).

In an embodiment, the storage device comprises a plurality of non-volatile memory cells that are embedded in the insulating support. However, the memory cells may be in any number, of any type (for example, fuses, phase-change elements) and with any arrangement (for example, in a matrix with corresponding access elements, accessible individually without any access elements).

In an embodiment, each memory cell is programmable to store any of a plurality of logic values that are defined by corresponding levels of an electrical characteristic of the memory cell. However, the memory cell may be programmed in any way (for example, by burning a fuse, changing the phase of a material); moreover, the memory cell may store any number of logic values (for example, one or more bits or factions thereof), each defined by any levels (for example, according to thresholds or ranges) of any electrical characteristic of the memory cell (for example, electrical resistance, capacitance).

In an embodiment, the storage device comprises a programming circuit for programming the memory cells according to a representation of the secret. However, the programing circuit may be of any type (for example, based on a capacitor, a charge pump) and it may be used to program the memory cells according to any representation of the secret (for example, by storing it with or without any control information in either clear or encrypted form).

In an embodiment, the storage device comprises a reading circuit for reading the representation of the secret from the memory cells. However, the reading circuit may be of any type (for example, based on pull-down or pull-up resistors, sense amplifiers) and it may be used to read the secret in any way (for example, only "as is" or with the possibility of correcting it, directly or decrypting it).

In an embodiment, the storage device comprises a plurality of vias. However, the vias may be in any number and of any type (for example, electroplated, lined with barrels).

In an embodiment, the vias extend into the insulating support from the first main surface and/or the second main surface. However, the vias may extend from a single main surface only, from both of them or in any combination thereof.

In an embodiment, each memory cell is connected between a corresponding pair of the vias. However, each memory cell may be connected to the corresponding vias in any way (for example, directly, through conductive tracks or any combination thereof); moreover, the pairs of vias may be associated with the memory cells in any way (for example, with a pair of vias dedicated to each memory cell or with some vias that are shared among multiple memory cells).

In an embodiment, the pair of vias is suitable for measuring the electrical characteristic of the memory cell. However, the pair of vias may be used to measure the electrical characteristic of the memory cell in any way (for example, by inserting probes therein, contacting corresponding pads or any combination thereof).

Further embodiments provide additional advantageous features, which may however be omitted at all in a basic implementation. In this respect, it is expressly intended that the features of each of the following embodiments may be combined with the above features either alone or in combination with the features of any number of the other following embodiments.

In an embodiment, the storage device comprises a board. However, the board may be of any shape, size and type (for example, based on silk screen printing, photoengraving, milling, laser ablation technologies, with any connector).

In an embodiment, the board has an insulating substrate of electrically insulating material and one or more inner conductive layers of electrically conductive material embedded in the insulating substrate. However, the insulating substrate may be of any type (see above) and it may embed any number of inner conductive layers made of any conductive material (for example, copper, aluminum).

In an embodiment, the conductive layers are patterned into corresponding fuses that define the memory cells. However, the fuses may be of any type (for example, obtained by narrowing and/or thinning the conductive layers).

In an embodiment, the conductive layers are patterned into a plurality of access lines for accessing the memory cells by the programming circuit and the reading circuit. However, the access lines may be in any number and of any type (for example, row/column lines, dedicated lines).

In an embodiment, each of the memory cells stores a first logic value when the corresponding fuse is conductive or a second logic value when the corresponding fuse is non-conductive. However, the conductive and non-conductive state may be defined in any way (for example, electrical resistance lower than a low threshold and higher than a high threshold, respectively) and the logic values may be associated with these states in any way (for example, 1 with the conductive state and 0 with the non-conductive state, or *vice-versa*)*.*

In an embodiment, the programming circuit comprises a burning circuit for burning each of the fuses from conductive to non-conductive. However, the burning circuit may be of any type (see above).

In an embodiment, the storage device comprises a shielding structure that is adapted to shielding the fuses from observation against light. However, the shielding structure may be of any type (for example, implemented by inner/outer conductive layers, opaque protective layers) of even missing at all (for example, when the insulating substrate itself is opaque or the board is handled only by the owner of the secret).

In an embodiment, the shielding structure is further adapted to shielding the fuses from analysis with X-rays. However, this feature may be implemented in any way (for example, with any metal layer, metal particles) or it may be omitted at all.

In an embodiment, the storage device comprises a first outer conductive layer and/or a second outer conductive layer of electrically conductive material arranged on the first main surface and the second main surface, respectively, which are patterned to define the shielding structure. However, the outer conductive layers may be provided on a single main surface only or on both of them, and they may be of any type (either the same or different with respect to the inner conductive layers).

In an embodiment, the storage device comprises a generation circuit for generating the secret to be stored in the storage device in a random way. However, the generation circuit may be of any type (for example, a dedicated device or embedded in the microprocessor) and it may generate the secret in any way (for example, in pseudo-random or true-random way).

In an embodiment, the storage device comprises a securing circuit for receiving the secret to be stored in the storage device from outside the storage device in a secure way. However, the securing circuit may be of any type (for example, a dedicated device or embedded in the microprocessor) and it may receive the secret in any secure way (for example, over a secure or simply confidential channel, in any encrypted form).

In an embodiment, the storage device comprises a cryptographic circuit for performing cryptographic operations based on the secret being read by the reading circuit. However, the cryptographic circuit may be of any type (for example, a dedicated device or embedded in the microprocessor, either the same or distinct from the securing circuit) and it may perform any operation based on the secret (for example, signing documents digitally, verifying documents being signed digitally by third parties, encrypting/decrypting information, performing transactions on blockchains of crypto-currencies).

In an embodiment, the storage device comprises a disabling circuit for disabling the programming circuit in response to said programming the memory cells. However, the disabling circuit may be of any type (for example, one or more disabling fuses arranged in any position) or it may be omitted at all.

In an embodiment, each of the vias extends from the first main surface to the second main surface. However, this result may be achieved in any way (for example, with through-hole vias, pairs of blind vias connected to each other within the board).

In an embodiment, the storage device comprises a plurality of access elements corresponding to the memory cells that are mounted on the first main surface and/or the second main surface. However, the access elements may be of any type (for example, one or more diodes) and they may be mounted (on a single main surface or on both of them) in any way (for example, with surface mounting, through-hole technology).

In an embodiment, the storage device comprises a plurality of row lines and a plurality of column lines for accessing the memory cells by the programming circuit and the reading circuit. However, the row lines and the column lines may be in any number and of any type (for example, formed in any number of conductive layers); moreover, the terms row and column have a mere topological meaning (independent of any physical implementation).

In an embodiment, each of the memory cells and the corresponding access element are connected in series between a corresponding pair of one of the row lines and one of the column lines. However, the memory cell and the access element may be connected in any way (for example, with the memory cell connected to either the cathode or the anode of the diode, the access element connected to the word line and the memory cell connected to the column line or *vice-versa*)*.*

In an embodiment, the storage device comprises a programming selection circuit and a reading selection circuit adapted to coupling selected one or more of the row lines and selected one or more of the column lines with the programming circuit and with the reading circuit, respectively. However, the programing/reading selection circuits may be of any type (for example, each formed by one or more dedicated selectors or with some selectors shared between them), each for selecting any number of row/column lines (from a single one to all of them).

In an embodiment, the programming selection circuit is adapted to coupling one selected row line and one selected column line with the programming circuit, and the reading selection circuit is adapted to coupling one selected row line and all the column lines with the reading circuit. However, more generally the programming/reading circuits may select a single row line and a single column line, a single row/column line and all the other column/row lines or a sub-set thereof at the time (for programming/reading a single memory cell or a word of two or more memory cells).

In an embodiment, the memory device comprises an error control circuit for generating a code block from the secret with addition of control information and for correcting the secret according to the control information (with the programming circuit that is adapted to programming the memory cells according to the code block and the reading circuit that adapted to reading the code block). However, the error control circuit may be of any type (for example, a dedicated device or embedded in the microprocessor); moreover, any error control technique (capable of detecting and/or correcting any number of bits) may be used to generate the code block from the secret and to retrieve the secret from the code block in any way (for example, with or without modifying the secret in the code block).

Generally, similar considerations apply if the storage device has a different structure, comprises equivalent components (for example, of different materials) or it has other operative characteristics, provided that it remains within the scope of the claims. In any case, every component thereof may be separated into more elements, or two or more components may be combined together into a single element; moreover, each component may be replicated to support the execution of the corresponding operations in parallel. It is expressly understood that, unless specified otherwise, any interaction between different components (including their mutual arrangement) generally does not need to be continuous, and it may be either direct or indirect through one or more intermediaries

An embodiment provides a method for storing a secret in a storage device. The method comprises programming a plurality of non-volatile memory cells. The memory cells are embedded in an insulating support of electrically insulating material of the storage device (having a first main surface and a second main surface opposite to each other). Each memory cell is programmable to store any of a plurality of logic values defined by corresponding levels of an electrical characteristic of the memory cell. The memory cells are programmed according to a representation of the secret (by a programming circuit of the storage device). The method comprises reading the representation of the secret from the memory cells (by a reading circuit of the storage device). The method comprises measuring the electrical characteristic of each of the memory cells. Each memory cell is connected between a corresponding pair of vias. The vias extend into the insulating support from the first main surface and/or the second main surface. The electrical characteristic of the memory cell is measured through the pair of vias.

Generally, similar considerations apply if the same solution is implemented with an equivalent method, provided that it remains within the scope of the claims. In any case, the method may be performed by using similar steps with the same functions of more steps or portions thereof, removing some non-essential steps or adding further optional steps; moreover, the steps may be performed in a different order, concurrently or in an interleaved way (at least in part).

## Claims

1. A storage device (100) for storing a secret, wherein the storage device (100) comprises:
an insulating support (105) of electrically insulating material having a first main surface (110t) and a second main surface (110b) opposite to each other,
a plurality of non-volatile memory cells (315) embedded in the insulating support (105) each programmable to store any of a plurality of logic values defined by corresponding levels of an electrical characteristic of the memory cell (315),
a programming circuit (430) for programming the memory cells (315) according to a representation of the secret,
a reading circuit (410,420) for reading the representation of the secret from the memory cells (315), and
a plurality of vias (130) extending into the insulating support (105) from the first main surface (110t) and/or the second main surface (110b), each of the memory cells (315) being connected between a corresponding pair of the vias (130b,130c) for measuring the electrical characteristic of the memory cell (315).

2. The storage device (100) according to claim 1, wherein the storage device (100) comprises a board (105) having an insulating substrate (305) of electrically insulating material and one or more inner conductive layers (310i,310ii) of electrically conductive material embedded in the insulating substrate (305) being patterned into corresponding fuses (315) defining the memory cells (315) and a plurality of access lines (320,325) for accessing the memory cells (315) by the programming circuit (430) and the reading circuit (410,420), each of the memory cells (315) storing a first logic value when the corresponding fuse (315) is conductive or a second logic value when the corresponding fuse (315) is non-conductive, and wherein the programming circuit (430) comprises a burning circuit (430) for burning each of the fuses (315) from conductive to non-conductive.

3. The storage device (100) according to claim 2, wherein the storage device (100) comprises a shielding structure (330,335) adapted to shielding the fuses (315) from observation against light and/or from analysis with X-rays.

4. The storage device (100) according to claim 3, wherein the storage device (100) comprises a first outer conductive layer (310t) and/or a second outer conductive layer (310b) of electrically conductive material arranged on the first main surface (110t) and the second main surface (110b), respectively, being patterned to define the shielding structure (330,335).

5. The storage device (100) according to any claim from 1 to 4, wherein the storage device (100) comprises:
a generation circuit (465) for generating the secret to be stored in the storage device (100) in a random way.

6. The storage device (100) according to any claim from 1 to 5, wherein the storage device (100) comprises:
a securing circuit (455) for receiving the secret to be stored in the storage device (100) from outside the storage device (100) in a secure way.

7. The storage device (100) according to any claim from 1 to 6, wherein the storage device (100) comprises:
a cryptographic circuit (455) for performing cryptographic operations based on the secret being read by the reading circuit (410,420).

8. The storage device (100) according to any claim from 1 to 7, wherein the storage device (100) comprises:
a disabling circuit (435-440) for disabling the programming circuit (430) in response to said programming the memory cells (315).

9. The storage device (100) according to any claim from 1 to 8, wherein each of the vias (130b,130c) extends from the first main surface (110t) to the second main surface (110b).

10. The storage device (100) according to any claim from 1 to 9, wherein the storage device (100) comprises a plurality of access elements (120) corresponding to the memory cells (315) being mounted on the first main surface (110t) and/or the second main surface (110b), a plurality of row lines (325) and a plurality of column lines (320) for accessing the memory cells (315) by the programming circuit (430) and the reading circuit (410,420), each of the memory cells (315) and the corresponding access element (120) being connected in series between a corresponding pair of one of the row lines (325) and one of the column lines (320), a programming selection circuit (425,445) adapted to coupling a selected one of the row lines (325) and a selected one of the column lines (320) with the programming circuit (430) and a reading selection circuit (405,415) adapted to coupling a selected one of the row lines (325) and all the column lines (320) with the reading circuit (410,420).

11. The memory device (100) according to any claim from 1 to 10, wherein the memory device (100) comprises an error control circuit (460) for generating a code block from the secret with addition of control information and for correcting the secret according to the control information, the programming circuit (430) being adapted to programming the memory cells (315) according to the code block and the reading circuit (410,420) being adapted to reading the code block.

12. A method for storing a secret in the storage device (100) according to any claim from 1 to 11, wherein the method comprises:
programming the memory cells (315) according to the representation of the secret by the programming circuit (430),
reading the representation of the secret from the memory cells (315) by the reading circuit (410,420), and
measuring the electrical characteristic of each of the memory cells (315) through the corresponding pair of vias (130b,130c).
